# EUROPEAN PATENT APPLICATION

(11) **EP 4 844 841 A1**
(43) Date of publication of application: **25.11.2026**
(21) Application number: 25775054.7
(22) Date of filing: 07.01.2025
(51) Int. Cl.: H01M 4/62, H01M 4/36, H01M 4/505, H01M 4/525, H01M 4/485, H01M 4/131, H01M 10/0525, C01G 53/00

(54) **POSITIVE ELECTRODE ACTIVE MATERIAL AND PREPARATION METHOD THEREFOR, POSITIVE ELECTRODE SHEET, SECONDARY BATTERY, AND ELECTRIC DEVICE**

(30) Priority: 26.03.2024 CN 202410354624
(71) Applicant: Contemporary Amperex Technology Co., Limited, Ningde, Fujian 352100 (CN)
(72) Inventor: ZHANG, Qiyu, Ningde, Fujian 352100 (CN); WU, Qi, Ningde, Fujian 352100 (CN); CHEN, Qiang, Ningde, Fujian 352100 (CN); REN, Meng, Ningde, Fujian 352100 (CN); WANG, Qiqi, Ningde, Fujian 352100 (CN); LIU, Na, Ningde, Fujian 352100 (CN)
(74) Representative: Ziebig Hengelhaupt Intellectual Property Attorneys Patentanwaltskanzlei PartGmbB
(86) International application number: PCT/CN2025/071080
(87) International publication number: WO 2025/200710

(57) **Abstract**

A positive electrode active material and a preparation method therefor, a positive electrode sheet, a secondary battery (1), and an electric device (2). The positive electrode active material comprises core-shell particles, each core-shell particle comprises an inner core and a shell layer, the inner core comprises a first positive electrode material, and the shell layer comprises a second positive electrode material. The first positive electrode material comprises a material represented by the general formula, i.e., Liₐ₁Ni_{b1}M1_{c1}O₂, wherein M1 comprises one or more of Mn, Co, Al, Mg, Ti, Zr, and W, 0.9 ≤ a1 ≤ 1.2, and b1+c1=1; the second positive electrode material comprises a material represented by the general formula, i.e., Liₐ₂Ni_{b2}M2_{c2}O₂, wherein M2 comprises one or more of Mn, Al, Sr, Nb, and Y, 0.9≤a2≤1.2, and b2+c2=1; c2 and c1 satisfy: c2-c1 ≥0.05. The positive electrode active material has high nickel content and high thermal stability.

## Description

### CROSS-REFERENCE TO RELATED APPLICATIONS

The present application claims priority to Chinese Patent Application No. 2024103546247, filed on March 26, 2024 and entitled "Positive Electrode Active Material And Preparation Method Therefor, Positive Electrode Sheet, Secondary Battery, And Electric Device", which is incorporated herein by reference in its entirety.

### TECHNICAL FIELD

The present application relates to the technical field of secondary batteries, and in particular, to a positive electrode active material, a preparation method, a positive electrode sheet, a secondary battery, and an electric device.

### BACKGROUND

The statement here merely provides the background information related to the present application and does not necessarily constitute the prior art.

In recent years, as the application range of lithium ion batteries becomes wider, the lithium ion batteries are widely used in energy storage power systems such as hydraulic power stations, thermal power stations, wind power stations, and solar power stations, as well as a plurality of fields such as power tools, electric bicycles, electric motorcycles, electric vehicles, and aerospace. Due to great development of the lithium ion batteries, higher requirements are put forward for energy density, cycle performance, safety performance, and the like of the lithium ion batteries.

The ultra-high nickel positive electrode material (with a nickel content of ≥80%) can endow the battery with a higher capacity and improve the energy density. However, the ultra-high nickel positive electrode material itself has poor thermal stability, and is easily affected by the temperature change of the battery itself to decompose to generate oxygen and release a large amount of heat, and then thermal runaway is likely to occur, especially when the ultra-high nickel positive electrode material is applied to a cylindrical battery, the internal winding remaining space is small, and thermal runaway or even explosion is more likely to occur.

### SUMMARY

In order to achieve the above objective, a first aspect of the present application provides a positive electrode active material with a higher nickel content and higher thermal stability and a preparation method thereof, and a positive electrode sheet including the positive electrode active material, a secondary battery, and an electric device.

In the first aspect of the present application, a positive electrode active material is provided, including a core-shell particle, where the core-shell particle includes an inner core and a shell layer, the inner core includes a first positive electrode material, and the shell layer includes a second positive electrode material;
the first positive electrode material includes a material represented by a general formula of Liₐ₁Ni_{b1}M1_{c1}O₂, M1 includes one or more of Mn, Co, Al, Mg, Ti, Zr, and W, 0.9≤a1≤1.2, b1+c1=1; and
the second positive electrode material comprises a material represented by a general formula of Liₐ₂Ni_{b2}M2_{c2}O₂, M2 includes one or more of Mn, Al, Sr, Nb, and Y, 0.9≤a2≤1.2, b2+c2=1;
where c2 and c1 satisfy: c2-c1≥0.05.

For the above positive electrode active material, on the basis of the core-shell structure, the element ratios in the positive electrode material of the inner core and the shell layer are reasonably configured, which can form a stable surface layer structure of the material, reduce the surface lattice oxygen loss, thereby effectively improving the thermal stability of the material, and enable the material to have better high-temperature cycle performance, so that the positive electrode active material has higher capacity and energy density and better high-temperature cycle stability as a whole.

In some implementations, c2 and c1 satisfy: 0.05≤c2-c1≤0.3.

In some implementations, the second positive electrode material satisfies one or more of the following features:
(1) 0.6≤b2≤0.92;
(2) 0.05≤c2≤0.4; and
(3) 0.9≤a2≤1.02.

In some implementations, the first positive electrode material satisfies one or more of the following features:
(1) 0.8≤b1≤1; and
(2) 0≤c1≤0.2; and
(3) 0.95≤a1≤1.05.

In some implementations, a thickness of the shell layer is 0.1 µm to 3 µm.

In some implementations, the core-shell particle further includes an intermediate layer disposed between the inner core and the shell layer, the intermediate layer includes a third positive electrode material, the third positive electrode material includes a material represented by a general formula of Liₐ₃Ni_{b3}M2_{c3}M3_{d3}O₂, M3 includes one or more of Zr, Ti, W, Mo, Ta, Sn, Se and Sb, 0.9≤a3≤1.2, and b3+c3+d3=1. By introducing the intermediate layer doped with elements, the lattice oxygen can be effectively bound, and the blocking effect is exerted when the shell structure fails, and the migration of the lattice oxygen is reduced, thereby improving the thermal stability of the material and improving the cycle performance.

In some implementations, the third positive electrode material satisfies any one or more of the following features:
(1) 0.8≤b3≤0.9; and
(2) 0≤c3≤0.1; and
(3) 0.02≤d3≤0.1.

In some implementations, a thickness of the intermediate layer is 0.1 µm to 1 µm.

In some implementations, a Dv50 of the core-shell particle is 6 µm to 15 µm.

A second aspect of the present application provides a method for preparing the positive electrode active material, including the following steps:
mixing a Ni salt, a salt of M1 and a first solvent according to a general formula Liₐ₁Ni_{b1}M1_{c1}O₂ to prepare a first precursor solution;
mixing a Ni salt, a salt of M2 and a second solvent according to a general formula Liₐ₂Ni_{b2}M2_{c2}O₂ to prepare a second precursor solution;
preparing a precursor of the core-shell particle by a precipitation method using the first precursor solution and the second precursor solution; and
mixing the precursor with a lithium salt for calcination to prepare the positive electrode active material.

In some implementations, the preparation method further includes steps of preparing a third precursor solution by mixing a Ni salt, a salt of M2, a salt of M3, and a third solvent according to a general formula of Liₐ₃Ni_{b3}M2_{c3}M3_{d3}O₂, and preparing the precursor of the core-shell particle by precipitating the third precursor solution, the first precursor solution, and the second precursor solution.

In some implementations, preparation of the precursor of the core-shell particle has one or more of the following features:
(1) a precipitant used includes one or more of sodium hydroxide, sodium carbonate, potassium carbonate and potassium hydroxide;
(2) a complexing agent used includes one or more of ammonia, ammonium chloride, ammonium sulfate, urea, citric acid and ethylenediaminetetraacetic acid;
(3) controlling a pH value of a reaction to be 11 to 14; and
(4) the reaction temperature being 40°C to 80°C.

In some implementations, sintering has one or a plurality of the following features:
(1) a sintering temperature being 400°C to 800°C;
(2) a sintering time being 8h to 18h;
(3) a heating rate being 0.5°C/min to 5°C/min; and
(4) an atmosphere being air or an O2 atmosphere.

A third aspect of the present application provides a positive electrode sheet, including the positive electrode active material according to the first aspect of the present application or the positive electrode active material prepared by adopting the method according to the second aspect of the present application.

A fourth aspect of the present application provides a secondary battery, including the positive electrode sheet according to the third aspect.

In some implementations, the secondary battery is a cylindrical battery.

A fifth aspect of the present application provides an electric device, including one or more of the positive electrode sheet according to the third aspect and the secondary battery according to the fourth aspect.

### BRIEF DESCRIPTION OF THE DRAWINGS

To better describe and illustrate embodiments and/or examples provided in the present application, reference may be made to one or a plurality of accompanying drawings. Additional details or examples used to describe the accompanying drawings should not be considered as limiting the scope of any of the disclosed application, the currently described embodiments or examples, and best modes of these applications as currently understood. Moreover, the same reference numerals are used to denote the same components throughout the accompanying drawings. In the accompanying drawings:
FIG. 1 is a schematic diagram of a secondary battery according to an implementation of the present application;
FIG. 2 is an exploded view of the secondary battery according to the implementation of the present application shown in FIG. 1; and
FIG. 3 is a schematic diagram of an electric device using a secondary battery as a power supply according to an embodiment of the present application.

Description of reference signs:
1, secondary battery; 11, housing; 12, electrode assembly; 13, cover plate; 2, electric device.

### DETAILED DESCRIPTION OF PREFERRED EMBODIMENTS

In order to facilitate the understanding of the present application, the present application will be described more fully below with reference to the relevant drawings. Preferred embodiments of the present application are given in the drawings. However, the present application can be implemented in many different forms and is not limited to the embodiments described herein. On the contrary, the purpose of providing these embodiments is to make the understanding of the disclosed content of the present application more thorough and comprehensive.

Unless otherwise defined, all technical and scientific terms used herein have the same meaning as commonly understood by those skilled in the art to which the present application belongs. The terms used in the specification of the present application herein are merely for the purpose of describing specific embodiments and are not intended to limit the present application. The term "and/or" used herein includes any and all combinations of one or more of the associated listed items.

The "range" disclosed in the present application is limited in the form of a lower limit and an upper limit. A given range is limited by selecting a lower limit and an upper limit, which define the boundaries of the specific range. A range defined in this manner may include an end value or may not include an end value, any end value may be independently included or not included, and may be any combination, that is, any lower limit may be combined with any upper limit to form a range. For example, if ranges of 60 to 120 and 80 to 110 are listed for specific parameters, it is understood that the ranges of 60 to 110 and 80 to 120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In the present application, unless otherwise stated, a numerical range "a to b" represents a shorthand representation for a combination of any real numbers between a and b, where both a and b are real numbers. For example, a numerical range of "0 to 5" represents that all real numbers in the range of "0 to 5" have been listed herein, and "0 to 5" is merely a shorthand representation of combinations of these numerical values. In addition, when a parameter is expressed as an integer≥2, it is equivalent to listing that the parameter is an integer such as 2, 3, 4, 5, 6, 7, 8, 9, 10, 11, or 12. For example, when a parameter is expressed as an integer sleeted from "2 to 10", it is equivalent to listing integers 2, 3, 4, 5, 6, 7, 8, 9, and 10.

Unless otherwise defined, "a plurality of", "a variety of", and the like related in the present application mean a number of two or more. For example, "one or more" means one or greater than or equal to two.

Unless otherwise specified, all implementations and optional implementations of the present application may be combined with each other to form new technical solutions.

The "embodiment" mentioned herein means that a particular feature, structure, or characteristic described with reference to the embodiment may be included in at least one embodiment or implementation of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments. The "implementation" mentioned herein has a similar understanding.

Those skilled in the art may understand that, in the method of each implementation or embodiment, a writing order of each step does not mean a strict execution order to constitute any limitation on an implementation process, and a detailed execution order of each step should be determined by its function and possible internal logic. Unless otherwise specified, all steps in the present application may be performed sequentially or randomly, preferably sequentially. For example, the method includes steps (a) and (b), which indicates that the method may include sequentially performed steps (a) and (b) or may include sequentially performed steps (b) and (a). For example, the mentioned method may further include step (c), which indicates that step (c) may be added to the method in any order, for example, the method may include steps (a), (b), and (c), may include steps (a), (c), and (b), may include steps (c), (a) and (b), or the like.

In the present application, in open technical features or technical solutions described by the words such as "contain", "include", and "comprise", unless otherwise specified, additional members other than the listed members are not excluded, and it may be considered that both closed features or solutions composed of the listed members and open features or solutions further including additional members in addition to the listed members are provided. For example, A includes a1, a2, and a3, and may further include another member or may not include an additional member unless otherwise specified, and it may be considered that both a feature or solution in which "A consists of a1, a2, and a3" and a feature or solution in which "A includes not only a1, a2, and a3 but also another member" are provided.

In the present application, unless otherwise specified, A (e.g., B) means that B is a non-limiting example of A, and it may be understood that A is not limited to B.

In the present application, "optionally", "optional", and "option" means that there is or not, that is, means any one of two parallel solutions: "with" or "without". If "option" occurs repeatedly in a technical solution, each "option" is independent, unless otherwise specified without inconsistency or mutual restriction.

In the present application, the internal structure and element distribution of the material can be analyzed by CP+SEM/EDS, the cross-section of the positive electrode active material can be obtained by CP, and the element distribution can be observed in combination with SEM/EDS.

An implementation of the present application provides a positive electrode active material, including a core-shell particle, where the core-shell particle includes an inner core and a shell layer, the inner core includes a first positive electrode material, and the shell layer includes a second positive electrode material;
the first positive electrode material includes a material represented by a general formula of Liₐ₁Ni_{b1}M1_{c1}O₂, M1 includes one or more of Mn, Co, Al, Mg, Ti, Zr, and W, 0.9≤a1≤1.2, b1+c1=1; and
the second positive electrode material comprises a material represented by a general formula of Liₐ₂Ni_{b2}M2_{c2}O₂, M2 includes one or more of Mn, Al, Sr, Nb, and Y, 0.9≤a2≤1.2, b2+c2=1;
where c2 and c1 satisfy: c2-c1≥0.05.

It is found through research that the thermal decomposition/oxygen release of the high-nickel material starts from the surface of the material first, and after the oxygen vacancies are formed, the migration of the lattice oxygen inside the material to the surface is further promoted to form a vicious circle. Based on this, the present application proposes to enhance the stability of the surface structure of the high-nickel material to reduce the phase change and oxygen release of the surface layer material structure. Meanwhile, it is also found by research that the use of a higher content of M2 element in the shell layer can make the surface structure of the high-nickel material more stable, and the oxidation release of lattice oxygen is not easy to occur at high temperature, and the exothermic temperature of the material can be delayed.

Based on this, in the above positive electrode active material, on the basis of the core-shell structure, the element ratios in the positive electrode materials of the inner core and the shell layer are reasonably configured, where the inner core adopts a first positive electrode material with high nickel and adopts less element doping, so that the overall capacity and energy density of the positive electrode active material are higher, and the shell layer adopts a second positive electrode material doped with M2 element with a higher content than the inner core, which can form a stable surface layer structure of the material, reduce the surface lattice oxygen loss, thereby effectively improving the thermal stability of the material, and making the material have better high-temperature cycle performance, so that the positive electrode active material has higher capacity and energy density and better high-temperature cycle stability as a whole. In addition, the arrangement of the core-shell structure can also reduce the erosion of the first positive electrode material with high nickel in the inner core by the electrolyte solution, and further improve the stability of the material.

It can be understood that "M1_{c1}" in the general formula Liₐ₁Ni_{b1}M1_{c1}O₂ of the first positive electrode material may include both traditional elements and stable structural elements, where the stable structural elements may be artificially added, or may be formed by diffusion of elements in the intermediate layer and the shell layer during the sintering process. The traditional elements include one or more of Mn and Co, and the stable structural elements include one or more of Al, Mg, Ti, Zr and W.

Specifically, the difference (c2-c1) between c2 and c1 includes, but is not limited to: 0.05, 0.08, 0.1, 0.11, 0.12, 0.13, 0.14, 0.15, 0.16, 0.18, 0.2, 0.25, 0.3, or a range between any two of the foregoing. Further, c2 and c1 satisfy: 0.05≤c2-c1≤0.3.

In some examples, in the second positive electrode material, 0.6≤b2≤0.92. Specifically, the value of b2 includes, but is not limited to: 0.6, 0.65, 0.7, 0.72, 0.75, 0.8, 0.82, 0.85, 0.9, 0.92, or a range between any two of the foregoing.

In some examples, in the second positive electrode material, 0.05≤c2≤0.4. Specifically, the value of c2 includes, but is not limited to: 0.05, 0.1, 0.15, 0.18, 0.2, 0.25, 0.28, 0.3, 0.35, 0.4, or a range between any two of the foregoing.

In some examples, in the second positive electrode material, 0.9≤a2≤1.02. Specifically, the value of a2 includes, but is not limited to: 0.9, 0.95, 1, 1.02, or a range between any two of the foregoing.

In some examples, in the first positive electrode material, 0.8≤b1≤1. Specifically, the value of b1 includes, but is not limited to: 0.8, 0.85, 0.9, 0.92, 0.95, 1, or a range between any two of the foregoing.

In some examples, in the first positive electrode material, 0≤c1≤0.2. Specifically, the value of c1 includes, but is not limited to: 0, 0.01, 0.03, 0.04, 0.05, 0.07, 0.08, 0.1, 0.15, 0.2, or a range between any two of the foregoing.

In some examples, in the first positive electrode material, 0.95≤a1≤1.05. Specifically, the value of a1 includes, but is not limited to: 0.95, 0.98, 1, 1.02, 1.05, or a range between any two of the foregoing.

In some examples, a thickness of the shell layer is 0.1 µm to 3 µm. Specifically, the thickness of the shell layer includes, but is not limited to: 0.1 µm, 0.2 µm, 0.3 µm, 0.7 µm, 1 µm, 1.2 µm, 1.5 µm, 1.7 µm, 1.8 µm, 1.9 µm, 2 µm, 2.1 µm, 2.2 µm, 2.5 µm, 3 µm, or a range between any two of the foregoing.

In some examples, the core-shell particle further includes an intermediate layer disposed between the inner core and the shell layer, the intermediate layer includes a third positive electrode material, the third positive electrode material includes a material represented by a general formula of Liₐ₃Ni_{b3}M2_{c3}M3_{d3}O₂, M3 includes one or more of Zr, Ti, W, Mo, Ta, Sn, Se and Sb, 0.9≤a3≤1.2, and b3+c3+d3=1. By introducing the intermediate layer doped with elements, the lattice oxygen can be effectively bound, and the blocking effect is exerted when the shell structure fails, and the migration of the lattice oxygen is reduced, thereby improving the thermal stability of the material and improving the cycle performance.

It can be understood that M3 is defined as M3 in the shell layer, and may be added artificially, or M3 in the shell layer may diffuse into the intermediate layer to form element doping during the sintering process.

Specifically, in the third positive electrode material, the value of a3 includes, but is not limited to: 0.9, 1, 1.02, 1.1, 1.15, 1.2, or a range between any two of the foregoing.

In some examples, in the third positive electrode material, 0.8≤b3≤0.9. Specifically, the value of b3 includes, but is not limited to: 0.8, 0.85, 0.82, 0.88, 0.9, or a range between any two of the foregoing.

In some examples, in the third positive electrode material, 0≤c3≤0.1. Specifically, the value of c3 includes, but is not limited to: 0, 0.02, 0.05, 0.07, 0.1, or a range between any two of the foregoing.

In some examples, in the third positive electrode material, 0.02≤d3≤0.18. Specifically, the value of d3 includes, but is not limited to: 0.02, 0.05, 0.08, 0.1, 0.12, 0.15, 0.18, or a range between any two of the foregoing.

In some examples, a thickness of the intermediate layer is 0.1 µm to 1 µm. Specifically, the thickness of the intermediate layer includes, but is not limited to: 0.1 µm, 0.3 µm, 0.4 µm, 0.45 µm, 0.47 µm, 0.48 µm, 0.49 µm, 0.5 µm, 0.51 µm, 0.52 µm, 0.53 µm, 0.54 µm, 0.7 µm, 1 µm, or a range between any two of the foregoing.

In some examples, a Dv50 of the core-shell particle is 6 µm to 15 µm. Specifically, the thickness of the intermediate layer includes, but is not limited to: 6 µm, 9 µm, 9.1 µm, 9.3 µm, 9.5 µm, 9.6 µm, 9.7 µm, 9.8 µm, 9.9 µm, 10 µm, 10.1 µm, 10.2 µm, 10.3 µm, 10.4 µm, 10.5 µm, 11 µm, 12 µm, 13 µm, 15 µm, or a range between any two of the foregoing. Further, the thickness of the intermediate layer is 9 µm to 12 µm.

Another example of the present application further provides a method for preparing a positive electrode active material, including the following steps:
mixing a Ni salt, a salt of M1 and a first solvent according to a general formula Liₐ₁Ni_{b1}M1_{c1}O₂ to prepare a first precursor solution;
mixing a Ni salt, a salt of M2 and a second solvent according to a general formula Liₐ₂Ni_{b2}M2_{c2}O₂ to prepare a second precursor solution;
preparing a precursor of the core-shell particle by a precipitation method using the first precursor solution and the second precursor solution; and
mixing the precursor with a lithium salt for calcination to prepare the positive electrode active material.

In some examples, the method for preparing the positive electrode active material further includes steps of preparing a third precursor solution by mixing a Ni salt, a salt of M2, a salt of M3, and a third solvent according to a general formula of Liₐ₃Ni_{b3}M2_{c3}M3_{d3}O₂, and preparing the precursor of the core-shell particle by precipitating the third precursor solution, the first precursor solution, and the second precursor solution.

It can be understood that the solution of the above preparation method is similar to the foregoing positive electrode active material, and details are not described herein again.

Without limitation, the Ni salt, the salt of M1, the salt of M2, the salt of M3, the salt of M4, and the like may be one or more of sulfate, nitrate, chloride, fluoride, oxalate, and acetate of the corresponding element.

Without limitation, the lithium salt may employ one or more of LiOH·H₂O, Li₂CO₃, Li₂SO₄, LiNO₃, LiC₂O₄, and CH₃COOLi.

Further, in the process of preparing the precursor of the core-shell particle by the precipitation method:
In some examples, the precipitant used includes one or more of sodium hydroxide, sodium carbonate, potassium carbonate and potassium hydroxide.

In some examples, the complexing agent used includes one or more of ammonia, ammonium chloride, ammonium sulfate, urea, citric acid and ethylenediaminetetraacetic acid (EDTA).

In some examples, a pH value of a reaction is controlled to be 11 to 14.

In some embodiments, the reaction temperature is 40°C to 80°C.

Further, in the sintering process:
In some embodiments, the sintering temperature is 400°C to 800°C.

In some examples, the sintering time is 8h to 18h.

In some examples, the heating rate is 0.5°C/min to 5°C/min.

In some examples, the atmosphere is air or an O₂ atmosphere.

A further implementation of the present application provides a positive electrode sheet, including one or more of the positive electrode active material as described above and the positive electrode active material prepared by the preparation method as described above.

A further implementation of the present application provides a secondary battery, including the positive electrode sheet as described above.

In some examples, the secondary battery is a cylindrical battery.

A further implementation of the present application provides an electric device, including one or more of the foregoing positive electrode sheet and the foregoing secondary battery.

The following appropriately describes the secondary battery and the electric device in the present application with reference to the accompanying drawings.

Generally, the secondary battery includes a positive electrode sheet, a negative electrode sheet, an electrolyte, and a separator. During charging and discharging of the battery, active ions are intercalated and deintercalated back and forth between the positive electrode sheet and the negative electrode sheet. The electrolyte functions to conduct ions between the positive electrode sheet and the negative electrode sheet. The separator is arranged between the positive electrode sheet and the negative electrode sheet, to mainly prevent positive and negative electrodes from being short-circuited and allow ions to pass through.

The positive electrode sheet includes a positive electrode current collector and a positive electrode film layer disposed on at least one surface of the positive electrode current collector, the positive electrode film layer including a positive electrode active material.

As a non-limiting example, the positive electrode current collector has two surfaces opposite to each other in its own thickness direction, and a positive electrode active material layer is disposed on either one or both of the two opposite surfaces of the positive electrode current collector.

In some implementations, the positive electrode current collector may be a metal foil or a composite current collector. For example, an aluminum foil can be used as the metal foil. The composite current collector may include a polymer material base layer and a metal layer formed on at least one surface of the polymer material base layer. The composite current collector may be obtained by forming a metal material on a polymer material substrate. In the positive electrode current collector, a non-limiting example of the metal material may include one or more of aluminum, an aluminum alloy, nickel, a nickel alloy, titanium, a titanium alloy, silver, a silver alloy, or the like. In the positive electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the positive electrode active material may be a positive electrode active material for a battery known in the art. As a non-limiting example, the positive electrode active material may include one or more of the following materials: olivine-structured lithium-containing phosphate, lithium transition metal oxide, and their respective modified compounds. However, the present application is not limited to these materials, and other conventional materials that can be used as a positive electrode active material of a battery may also be used. These positive electrode active materials may be used alone or in combination of two or more thereof. An example of the lithium transition metal oxide may include, but is not limited to, one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Non-limiting examples of the olivine-structured lithium-containing phosphate may include, but are not limited to, one or more of lithium iron phosphate, a lithium iron phosphate and carbon composite, lithium manganese phosphate, a lithium manganese phosphate and carbon composite, lithium iron manganese phosphate, and a lithium iron manganese phosphate and carbon composite. Non-limiting examples of the lithium cobalt oxide may include LiCoO₂. Non-limiting examples of the lithium nickel oxide may include LiNiO₂. Non-limiting examples of the lithium manganese oxide may include LiMnO₂ and LiMnO₂O₄. Non-limiting examples of the lithium nickel cobalt manganese oxide may include LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), and LiNi_{0.8}Co_{0.1}Mn_{0.1}O₂ (also abbreviated as NCM₈₁₁). Non-limiting examples of the lithium nickel cobalt aluminum oxide may include LiNi_{0.8}Co_{0.15}Al_{0.05}O₂.

In some embodiments, the positive electrode active material layer further optionally includes a binder. As a non-limiting example, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent. As a non-limiting example, the conductive agent may include one or more of superconducting carbon, acetylene black, carbon black, Ketjen black, carbon dots, carbon nanotubes, graphene, and carbon nanofibers.

In some embodiments, the positive electrode sheet may be prepared by the following method: The above components for preparing the positive electrode sheet, such as the positive electrode active material, the conductive agent, and the binder, and any other components are dispersed in a solvent to form a positive electrode slurry. The positive electrode slurry is coated on at least one side surface of the positive current collector, followed by processes such as drying and cold pressing, to obtain the positive electrode sheet. The type of solvent may be selected from any one in the aforementioned embodiments, for example, N-methylpyrrolidone (NMP). The surface of the positive electrode current collector that is coated with the positive electrode slurry may be either a single surface or both surfaces of the positive electrode current collector. The surface of the positive electrode current collector that is coated with the positive electrode slurry may be either a single surface or both surfaces of the positive electrode current collector. The solid content of the positive electrode slurry may be 40 wt% to 80 wt%. The viscosity of the positive electrode slurry at room temperature may be adjusted to 5000 mPa·s to 25000 mPa·s. During coating of the positive electrode slurry, the coating density per unit area on a dry weight basis (excluding the solvent) may be 15 mg/cm² to 35 mg/cm². The compacted density of the positive electrode sheet may be 3.0 g/cm³ to 3.6 g/cm³, and optionally, may be 3.3 g/cm³ to 3.5 g/cm³.

The negative electrode sheet includes a negative electrode current collector and a negative electrode active material layer that is disposed on at least one surface of the negative electrode current collector, the negative electrode active material layer including a negative electrode active material.

As a non-limiting example, the negative electrode current collector has two surfaces opposite in its own thickness direction, and the negative electrode active material layer is disposed on either one or both of the two opposite surfaces of the negative electrode current collector.

In some embodiments, the negative electrode current collector may be metal foil or a composite current collector. For example, a copper foil may be used as the metal foil. The composite current collector may include a polymer material base layer and a metal layer formed on at least one surface of a polymer material substrate. The composite current collector may be obtained by forming a metal material on a polymer material substrate. In the negative electrode current collector, a non-limiting example of the metal material may include one or more of copper, a copper alloy, nickel, a nickel alloy, titanium, a titanium alloy, silver, a silver alloy, or the like. In the negative electrode current collector, a non-limiting example of the polymer material substrate may include one or more of substrates such as polypropylene (PP), polyethylene terephthalate (PET), polybutylene terephthalate (PBT), polystyrene (PS), and polyethylene (PE).

In some embodiments, the negative electrode active material may be a negative electrode active material for a battery known in the art. As a non-limiting example, the negative electrode active material may include one or more of the following materials: artificial graphite, natural graphite, soft carbon, hard carbon, a silicon-based material, a tin-based material, and lithium titanate. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials, and other conventional materials that can be used as a negative electrode active material of a battery may also be used. These negative electrode active materials may be used alone or in combination of two or more thereof.

In some embodiments, the negative electrode active material layer further optionally includes a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may include at least one or more of superconducting carbon, acetylene black, carbon black, Ketjen black, carbon dots, carbon nanotubes, graphene, and carbon nanofibers.

In some embodiments, the negative electrode active material layer further optionally includes another auxiliary agent, for example, a thickening agent (e.g., sodium carboxymethyl cellulose (CMC-Na)).

In some embodiments, the negative electrode sheet may be prepared by the following method: The above components for preparing the negative electrode sheet, such as the negative electrode active material, the conductive agent, and the binder, and any other components are dispersed in a solvent (a non-limiting example of the solvent is, for example, deionized water) to form a negative electrode slurry. The negative electrode slurry is coated on at least one side surface of the negative current collector, followed by processes such as drying and cold pressing, to obtain the negative electrode sheet. The surface of the negative electrode current collector that is coated with the negative electrode slurry may be either a single surface or both surfaces of the negative electrode current collector. The solid content of the negative electrode slurry may be 40 wt% to 60 wt%. The viscosity of the negative electrode slurry at room temperature may be adjusted to 2000 mPa·s to 10000 mPa·s. When the negative electrode slurry is applied, the coating density per unit area on a dry weight basis (excluding the solvent) may be 75 g/m² to 220 g/m². The compacted density of the negative electrode sheet may be 1.0 g/cm³ to 1.8 g/cm³.

The electrolyte functions to conduct ions between the positive electrode sheet and the negative electrode sheet. The type of the electrolyte is not particularly limited in the present application, and may be selected according to a requirement. For example, the electrolyte may be liquid, gelled or all solid.

In some implementations, the electrolyte uses an electrolyte solution. The electrolyte solution includes an electrolyte salt and a solvent.

In some embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluorophosphate (LiPO₂F₂), lithium diofluoroxalate borate (LiDFOB), lithium dioxalate borate (LiBOB), lithium difluorodioxalate phosphate (LiDFOP), and lithium tetrafluorooxalate phosphate (LiTFOP).

In some implementations, the solvent may include one or more of ethylene carbonate (EC, 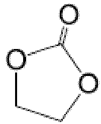 ), propylene carbonate (PC, 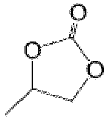 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 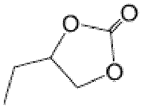 ), fluoroethylene carbonate (FEC), methyl acetate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and ethyl sulfonyl ethane.

In some embodiments, the electrolyte solution further optionally includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

In some embodiments, the additive in the electrolyte may include, but is not limited to, one or more of fluoroethylene carbonate (FEC), difluoroethylene carbonate (DFEC), trifluoromethyl ethylene carbonate (TFPC), or the like.

In some embodiments, the secondary battery further includes a separator. The type of the separator is not particularly limited in the present application, and any well-known porous separator with good chemical stability and mechanical stability may be used.

In some embodiments, a material of the separator may include one or more of glass fiber, non-woven fabric, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some implementations, the thickness of the separator is 6 µm to 40 µm, optionally 12 µm to 20 µm.

In some embodiments, the positive electrode sheet, the negative electrode sheet, and the separator may be manufactured into an electrode assembly through a winding process or a lamination process.

In some embodiments, the secondary battery may include an outer package. The outer package may be used to package the above electrode assembly and electrolyte.

In some embodiments, the outer package of the secondary battery may be a hard shell, for example, a hard plastic shell, an aluminum shell, or a steel shell. The outer package of the secondary battery may also be a pouch, such as a bag-type pouch. A material of the pouch may be plastic, and further, non-limiting examples of the plastic may include one or more of polypropylene, polybutylene terephthalate, and polybutylene succinate.

The secondary battery includes at least one battery cell. The secondary battery may include one or more battery cells.

In the present application, unless otherwise specified, a "battery cell" refers to a basic unit capable of implementing mutual conversion of chemical energy and electrical energy, and further, generally includes at least a positive electrode sheet, a negative electrode sheet, and an electrolyte. During charging and discharging of the battery, active ions are intercalated and deintercalated back and forth between the positive electrode sheet and the negative electrode sheet. The electrolyte functions to conduct active ions between the positive electrode sheet and the negative electrode sheet.

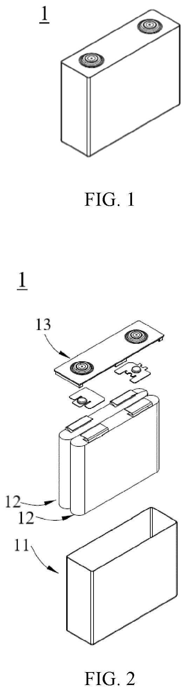

The shape of the battery cell is not particularly limited in the present application, and may be a cylindrical shape, a square shape, or any other shape. For example, FIG. 1 shows a secondary battery 1 of a square structure as an example.

In some embodiments, referring to FIG. 2, the outer package may include a housing 11 and a cover plate 13. The housing 11 may include a bottom plate and side plates connected to the bottom plate, and the bottom plate and the side plates define an accommodating chamber. The housing 11 is provided with an opening communicating with the accommodating chamber, and the cover plate 13 can cover the opening to close the accommodating chamber. The positive electrode sheet, the negative electrode sheet, and the separator may be formed into an electrode assembly 12 through a winding process or a lamination process. The electrode assembly 12 is packaged in the accommodating chamber. The electrolyte solution is impregnated into the electrode assembly 12. There may be one or a plurality of electrode assemblies 12 included in the secondary battery 1, and the quantity may be selected by those skilled in the art according to practical requirements.

The secondary battery may be a battery module or a battery pack.

The battery module includes at least one battery cell. There may be one or more battery cells included in the battery module, and those skilled in the art may select a proper quantity based on an application and the capacity of the battery module.

In the battery module, a plurality of battery cells may be arranged sequentially in a length direction of the battery module. Certainly, the battery cells may alternatively be arranged in any other manner. Further, the plurality of battery cells may be fastened by using fasteners.

Optionally, the battery module may further include a casing having an accommodating space in which the plurality of battery cells are accommodated.

In some embodiments, the foregoing battery modules may be further assembled into a battery pack, and there may be one or a plurality of battery modules included in the battery pack, and those skilled in the art may select a proper quantity according to an application and the capacity of the battery pack.

A battery case and a plurality of battery modules disposed in the battery case may be included in the battery pack. The battery case includes an upper case and a lower case, the upper case being capable of covering the lower case and forming a closed space for accommodating the battery modules. The plurality of battery modules may be arranged in the battery case in any manner.

In addition, the present application further provides an electric device, including the secondary battery provided in the present application. The secondary battery may be used as a power supply for the electric device, or as an energy storage unit for the electric device. The electric device may include, but is not limited thereto, a mobile device, an electric vehicle, an electric train, a ship, a satellite, an energy storage system, and the like. The mobile device may be, for example, a mobile phone, a notebook computer, or the like. The electric vehicle may be, for example, a pure electric vehicle, a hybrid electric vehicle, a plug-in hybrid electric vehicle, an electric bicycle, an electric scooter, an electric golf cart, an electric truck, an electric motorcycle, an electric tool, or the like, but is not limited thereto.

As an electric apparatus, the secondary battery may be selected according to use requirements of the electric device.

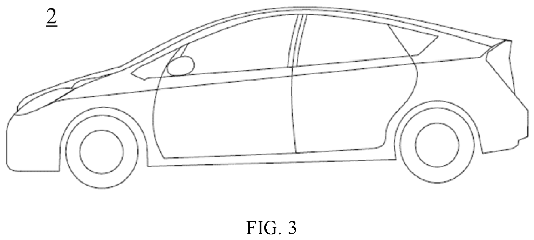

FIG. 3 shows an electric device 2 as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the electric device may be a cell phone, a tablet computer, a notebook computer, or the like. This electric device is generally required to be thin and lightweight, and may use a secondary battery as a power supply.

In order to make the technical problems solved by the present application, the technical solutions, and the beneficial effects clearer, the present application will be further described in detail below with reference to the embodiments and the accompanying drawings. Apparently, the described embodiments are only a part of the embodiments of the present application, and not all of the embodiments. The following description of at least one exemplary embodiment is merely illustrative in nature and is in no way intended as any limitation on the present application and its applications. All other embodiments obtained by those of ordinary skill in the art based on the embodiments of the present application without making creative efforts shall fall within the protection scope of the present application.

In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

This example shows preparation of a positive electrode active material, including the following steps:
(1) Nickel sulfate hexahydrate, cobalt sulfate heptahydrate and manganese sulfate monohydrate were mixed in a molar ratio of 90:6:4 and dissolved in pure water to obtain a first precursor salt solution with a total concentration of nickel ions, cobalt ions and manganese ions of 2 mol/L.
(2) Nickel sulfate hexahydrate and manganese sulfate monohydrate were mixed in a molar ratio of 80:20 and dissolved in pure water to obtain a second precursor salt solution with a total concentration of nickel ions and manganese ions of 2 mol/L.
(3) Nickel sulfate hexahydrate, manganese sulfate monohydrate and zirconium sulfate were mixed in a molar ratio of 85:10:5 and dissolved in pure water to obtain a third precursor salt solution with a total concentration of nickel ions, manganese ions and zirconium ions of 2 mol/L.
(4) 20L of pure water was added into a 100L reaction kettle, stirring was started, the temperature was maintained at 50°C, an appropriate amount of a precipitant solution (4 mol/L NaOH aqueous solution) was added, and the pH value of the solution in the reaction kettle was adjusted to 10-13.
(5) Under stirring, the first precursor salt solution, a precipitant solution (4 mol/L NaOH aqueous solution), and a complexing agent solution (2 mol/L ammonia aqueous solution) were added to the reactor at a certain rate, so that the salt solution underwent a coprecipitation reaction in the presence of a precipitant and a complexing agent, and the concentration of ammonia and the pH value in the reactor were kept unchanged during the reaction until the particle size Dv50 of the particles in the reactor reached a set value.
(6) Then, the first precursor salt solution was stopped being pumped, and the third precursor salt solution, the precipitant solution (4 mol/L NaOH aqueous solution), and the complexing agent solution (2 mol/L ammonia aqueous solution) were added to the reactor at a certain rate, and the concentration and pH of the ammonia aqueous solution in the reactor were kept unchanged until the particle size Dv50 of the particles in the reactor reached a set value.
(7) Then, the second precursor salt solution was stopped being pumped, and the second precursor salt solution, a precipitant solution (4 mol/L NaOH aqueous solution), and a complexing agent solution (2 mol/L ammonia aqueous solution) were added to the reactor at a certain rate, and the concentration and pH of the ammonia aqueous solution in the reactor were kept unchanged until the particle size Dv50 of the particles in the reactor reached a set value. After a reaction for a period of time, the ternary positive electrode material precursor was obtained by centrifugation, washing, filtration and drying.
(8) The ternary positive electrode material precursor was fully mixed with a lithium source Li₂CO₃, and then calcined at 500°C for 5h and then at 700°C for 12h in an air atmosphere to obtain a positive electrode active material. The ratio of the molar amount of the Li element in the lithium source to the total molar amount of the metal elements in the ternary positive electrode material precursor is 1.02:1.

The preparation of the positive electrode active materials of Examples 2-5 is the same as that of Example 1, and the main differences are as follows: The type of the first positive electrode material and/or the second material is changed to change the difference between c2 and c1.

The preparation of the positive electrode active materials of Examples 6-9 is the same as that of Example 1, and the main differences are as follows: Different first cathode materials and/or second materials are employed.

The preparation of the positive electrode active materials of Examples 10-14 is the same as that of Example 1, and the main differences are as follows: The thickness of the shell layer is changed, and the thickness of the intermediate layer and the core-shell particle Dv50 are controlled to be substantially unchanged.

The preparation of the positive electrode active material of Example 15 is the same as that of Example 1, and the main differences are as follows: Step (7) is not performed, that is, no intermediate layer is disposed, and the thickness of the shell layer and the Dv50 of the core-shell particle are controlled to be substantially unchanged.

The preparation of the positive electrode active materials of Examples 16-18 is the same as that of Example 1, and the main differences are as follows: The type of the third positive electrode material is changed.

The preparation of the positive electrode active materials of Examples 19-20 is the same as that of Example 1, and the main differences are as follows: The thickness of the intermediate layer is changed while the thickness of the shell layer and the Dv50 of the core-shell particles are controlled to be substantially unchanged.

The preparation of the positive electrode active materials of Examples 21-24 is the same as that of Example 1, and the main differences are as follows: The Dv50 of the core-shell particle is changed while the thickness of the shell layer and the thickness of the intermediate layer are controlled to be substantially unchanged.

The preparation of the positive electrode active material of Example 25 is the same as that of Example 1, and the main differences are as follows: The type of the second material is changed, and Al element is used as M2 doping.

The preparation of the positive electrode active material of Comparative Example 1 is the same as that of Example 1, and the main differences are as follows: The type of the second material is changed so that the difference between c2 and c1 is 0.9.

The preparation of the positive electrode active material of Comparative Example 2 is the same as that of Example 1, and the main differences are as follows: The type of the second material is changed, and the doping element M2 is not used.

The parameters of the positive electrode active materials in Examples 1-25 and Comparative Examples 1-2 of the present application are summarized in Tables 1-2.

### Preparation Example 1

### 1) Preparation of a positive electrode sheet

A positive electrode active material in the preparation example 1, conductive carbon black SP, and a binder PVDF were dispersed in a solvent NMP at a weight ratio of 98:1:1 and mixed uniformly to obtain a positive electrode slurry; the positive electrode slurry was uniformly coated on double surfaces of a positive electrode current collector aluminum foil, and after drying and cold pressing, a positive electrode sheet was obtained, with a coating amount per unit area of 0.27 g/1540.25 mm².

### 2) Preparation of a negative electrode sheet

A negative electrode active material graphite, a thickener sodium carboxymethyl cellulose, a binder styrene-butadiene rubber, and a conductive agent acetylene black were mixed at a mass ratio of 97:1:1:1, deionized water was added, and a negative electrode slurry was obtained under the action of a vacuum mixer; the negative electrode slurry was uniformly coated on doubles surfaces of a copper foil; and the copper foil was transferred to a 120°C oven and dried for 1 h, then cold pressed and slit to obtain a negative electrode sheet, with a coating amount per unit area of 0.17 g/1540.25 mm².

### 3) Separator

A polyethylene porous film having the thickness of 12 µm is selected as the separator.

### 4) Preparation of an electrolyte solution

The organic solvent is a mixed solution containing ethylene carbonate (EC), ethyl methyl carbonate (EMC) and diethyl carbonate (DEC), where the volume ratio of EC, EMC and DEC is 20:20:60. In an argon atmosphere glove box with a water content of smaller than 10 ppm, a sufficiently dried lithium saltLiPF6 was dissolved in an organic solvent and mixed uniformly to obtain an electrolyte solution. The concentration of the lithium salt was 1 mol/L.

### 5) Preparation of a battery

The positive electrode sheet, the separator, and the negative electrode sheet are stacked in sequence, so that the separator is located between the positive electrode sheet and the negative electrode sheet to play a role of isolation, and then wound into a square bare cell. Then, an aluminum plastic film is loaded, and then baked at 80°C to remove water.10g of a corresponding non-aqueous electrolyte is injected, sealed. After standing, hot and cold pressing, formation, clamping, capacity grading and other procedures, a finished battery with a capacity of 4000 mAh is obtained.

Secondary batteries of Preparation Examples 2 to 25 and secondary batteries of Comparative Examples 1 to 2 were prepared similarly to the secondary battery preparation method of Preparation Example 1, except that the positive electrode active materials of the corresponding Examples were used.

**Table 1**

| | Inner core | Shell layer | | | Intermediate layer | | Dv50 of core-shell particle |
|---|---|---|---|---|---|---|---|
| | First positive electrode material | Second positive electrode material | Thickness | c2-c1 | Third positive electrode material | Thickness | |
| Example 1 | Li_{1.02}Ni_{0.9}Co_{0.06}Mn_{0.04}O₂ | Li_{1.02}Ni_{0.8}Mn_{0.2}O₂ | 2.1 µm | 0.1 | Li_{1.02}Ni_{0.85}Mn_{0.1}Zr_{0.05}O₂ | 0.53 µm | 9.7 µm |
| Example 2 | Li_{1.02}Ni_{0.9}Co_{0.06}Mn_{0.04}O₂ | Li_{1.02}Ni_{0.82}Mn_{0.18}O₂ | 1.9 µm | 0.08 | Li_{1.02}Ni_{0.85}Mn_{0.1}Zr_{0.05}O₂ | 0.52 µm | 9.9 µm |
| Example 3 | Li_{1.02}Ni_{0.9}Co_{0.06}Mn_{0.04}O₂ | Li_{1.02}Ni_{0.85}Mn_{0.15}O₂ | 2.2 µm | 0.05 | Li_{1.02}Ni_{0.85}Mn_{0.1}Zr_{0.05}O₂ | 054 µm | 9.7 µm |
| Example 4 | Li_{1.02}Ni_{0.92}Co_{0.06}Mn_{0.04}O₂ | Li_{1.02}Ni_{0.72}Mn_{0.28}O₂ | 2.1 µm | 0.2 | Li_{1.02}Ni_{0.85}Mn_{0.1}Zr_{0.05}O₂ | 0.55 µm | 10.2 µm |
| Example 5 | Li_{1.02}Ni_{0.9}Co_{0.04}Mn_{0.01}O₂ | Li_{1.02}Ni_{0.65}Mn_{0.35}O₂ | 1.8 µm | 0.3 | Li_{1.02}Ni_{0.85}Mn_{0.1}Zr_{0.05}O₂ | 0.51 µm | 9.6 µm |
| Example 6 | Li_{1.02}Ni_{0.9}Co_{0.06}Mn_{0.04}O₂ | Li_{0.9}Ni_{0.8}Mn_{0.2}O₂ | 2.1 µm | 0.1 | Li_{1.02}Ni_{0.85}Mn_{0.1}Zr_{0.05}O₂ | 0.54 µm | 9.5 µm |
| Example 7 | Li_{0.95}Ni_{0.9}Co_{0.06}Mn_{0.04}O₂ | Li_{1.02}Ni_{0.8}Mn_{0.2}O₂ | 2.1 µm | 0.1 | Li_{1.02}Ni_{0.85}Mn_{0.1}Zr_{0.05}O₂ | 0.53 µm | 10.1 µm |
| Example 8 | Li_{1.02}Ni_{0.9}Co_{0.06}Mn_{0.039}Ti_{0.001}O₂ | Li_{1.02}Ni_{0.8}Mn_{0.2}O₂ | 1.9 µm | 0.1 | Li_{1.02}Ni_{0.85}Mn_{0.1}Zr_{0.05}O₂ | 0.51 µm | 10.3 µm |
| Example 9 | Li_{1.02}Ni_{0.9}Co_{0.04}Mn_{0.01}Al_{0.05}O₂ | Li_{1.02}Ni_{0.8}Mn_{0.2}O₂ | 2.2 µm | 0.1 | Li_{1.02}Ni_{0.85}Mn_{0.1}Zr_{0.05}O₂ | 0.52 µm | 9.7 µm |
| Example 10 | Li_{1.02}Ni_{0.9}Co_{0.06}Mn_{0.04}O | Li_{1.02}Ni_{0.8}Mn_{0.2}O₂ | 0.1 µm | 0.1 | Li_{1.02}Ni_{0.85}Mn_{0.1}Zr_{0.05}O₂ | 0.51 µm | 10.2 µm |
| Example 11 | Li_{1.02}Ni_{0.9}Co_{0.06}Mn_{0.04}O | Li_{1.02}Ni_{0.8}Mn_{0.2}O₂ | 0.3 µm | 0.1 | Li_{1.02}Ni_{0.85}Mn_{0.1}Zr_{0.05}O₂ | 0.49 µm | 9.8 µm |
| Example 12 | Li_{1.02}Ni_{0.9}Co_{0.06}Mn_{0.04}O | Li_{1.02}Ni_{0.8}Mn_{0.2}O₂ | 1 µm | 0.1 | Li_{1.02}Ni_{0.85}Mn_{0.1}Zr_{0.05}O₂ | 0.47 µm | 10.1 µm |
| Example 13 | Li_{1.02}Ni_{0.9}Co_{0.06}Mn_{0.04}O | Li_{1.02}Ni_{0.8}Mn_{0.2}O₂ | 2.5 µm | 0.1 | Li_{1.02}Ni_{0.85}Mn_{0.1}Zr_{0.05}O₂ | 0.52 µm | 10.2 µm |
| Example 14 | Li_{1.02}Ni_{0.9}Co_{0.06}Mn_{0.04}O | Li_{1.02}Ni_{0.8}Mn_{0.2}O₂ | 3 µm | 0.1 | Li_{1.02}Ni_{0.85}Mn_{0.1}Zr_{0.05}O₂ | 0.51 µm | 9.9 µm |
| Example 15 | Li_{1.02}Ni_{0.9}Co_{0.06}Mn_{0.04}O₂ | Li_{1.02}Ni_{0.8}Mn_{0.2}O₂ | 2.1 µm | 0.1 | / | / | 10.2 µm |

**Table 2**

| | Inner core | Shell layer | | | Intermediate layer | | Dv50 of core-shell particle |
|---|---|---|---|---|---|---|---|
| | First positive electrode material | Second positive electrode material | Thickness | c2-c1 | Third positive electrode material | Thickness | |
| Example 16 | Li_{1.02}Ni_{0.9}Co_{0.06}Mn_{0.04}O₂ | Li_{1.02}Ni_{0.8}Mn_{0.2}O₂ | 2.2 µm | 0.1 | Li_{0.02}Ni_{0.88}Mn_{0.1}Zr_{0.02}O₂ | 0.51 µm | 10.1 µm |
| Example 17 | Li_{1.02}Ni_{0.9}Co_{0.06}Mn_{0.04}O₂ | Li_{1.02}Ni_{0.8}Mn_{0.2}O₂ | 1.9 µm | 0.1 | Li_{1.02}Ni_{0.82}Mn_{0.1}Zr_{0.08}O₂ | 0.48 µm | 10.1 µm |
| Example 18 | Li_{1.02}Ni_{0.9}Co_{0.06}Mn_{0.04}O₂ | Li_{1.02}Ni_{0.8}Mn_{0.2}O₂ | 2.1 µm | 0.1 | Li_{1.02}Ni_{0.8}Mn_{0.1}Zr_{0.1}O₂ | 051 µm | 10.3 µm |
| Example 19 | Li_{1.02}Ni_{0.9}Co_{0.06}Mn_{0.04}O₂ | Li_{1.02}Ni_{0.8}Mn_{0.2}O₂ | 1.9 µm | 0.1 | Li_{1.02}Ni_{0.85}Mn_{0.1}Zr_{0.05}O₂ | 0.1 µm | 10.1 µm |
| Example 20 | Li_{1.02}Ni_{0.9}Co_{0.06}Mn_{0.04}O₂ | Li_{1.02}Ni_{0.8}Mn_{0.2}O₂ | 1.8 µm | 0.1 | Li_{1.02}Ni_{0.85}Mn_{0.1}Zr_{0.05}O₂ | 1 µm | 9.9 µm |
| Example 21 | Li_{1.02}Ni_{0.9}Co_{0.06}Mn_{0.04}O₂ | Li_{1.02}Ni_{0.8}Mn_{0.2}O₂ | 2 µm | 0.1 | Li_{1.02}Ni_{0.85}Mn_{0.1}Zr_{0.05}O₂ | 0.51 µm | 6 µm |
| Example 22 | Li_{1.02}Ni_{0.9}Co_{0.06}Mn_{0.04}O₂ | Li_{1.02}Ni_{0.8}Mn_{0.2}O₂ | 2.1 µm | 0.1 | Li_{1.02}Ni_{0.85}Mn_{0.1}Zr_{0.05}O₂ | 0.52 µm | 9 µm |
| Example 23 | Li_{1.02}Ni_{0.9}Co_{0.06}Mn_{0.04}O₂ | Li_{1.02}Ni_{0.8}Mn_{0.2}O₂ | 1.9 µm | 0.1 | Li_{1.02}Ni_{0.85}Mn_{0.1}Zr_{0.05}O₂ | 0.49 µm | 12 µm |
| Example 24 | Li_{1.02}Ni_{0.9}Co_{0.06}Mn_{0.04}O₂ | Li_{1.02}Ni_{0.8}Mn_{0.2}O₂ | 2.1 µm | 0.1 | Li_{1.02}Ni_{0.85}Mn_{0.1}Zr_{0.05}O₂ | 0.51 µm | 15 µm |
| Example 25 | Li_{1.02}Ni_{0.9}Co_{0.06}Mn_{0.04}O₂ | Li_{1.02}Ni_{0.8}Al_{0.2}O₂ | 1.9 µm | 0.1 | Li_{1.02}Ni_{0.85}Mn_{0.1}Zr_{0.05}O₂ | 0.52 µm | 10.1 µm |
| Comparative Example 1 | Li_{1.02}Ni_{0.9}Co_{0.06}Mn_{0.04}O₂ | Li_{1.02}Ni_{0.88}Mn_{0.12}O₂ | 2 µm | 0.02 | Li_{1.02}Ni_{0.85}Mn_{0.1}Zr_{0.05}O₂ | 0.49 µm | 10.2 µm |
| Comparative Example 2 | Li_{1.02}Ni_{0.9}Co_{0.06}Mn_{0.04}O₂ | Li_{1.02}Ni_{0.88}Mn_{0.12}O₂ | 2.1 µm | 0.1 | Li_{1.02}Ni_{0.85}Mn_{0.1}Zr_{0.05}O₂ | 0.48 µm | 9.8 µm |

Test examples
(1) Exothermic temperature DSC test
   1. A full battery was fully charged to 4.25 v at 0.33C, charged at a constant voltage of 4.25 v until the current was ≤0.05 mA, and then the battery was disassembled to take out the positive electrode sheet;
   2. An empty crucible was weighed in an indoor environment (the crucible was sealed by default at a high pressure);
   3. The crucible and the positive electrode sheet sample were transferred to a glove box, and the electrode sheet was die-cut into a wafer (diameter: 5 mm) and placed in the crucible;
   4. An electrolyte solution was dropwise added;
   5. The crucible was sealed, the crucible was transferred out of the glove box, weighed, and the weight of the substrate was subtracted from the difference between the two masses to obtain the weight of the sample;
   6. Test: The temperature range of the test was 35°C to 1000°C, and the heating rate was 10°C/min.
(2) Cycle performance test for a full battery at 25/45°C

In a constant temperature environment of 25°C or 45°C, the battery was charged to 4.25 v at 1C at 2.8-4.25 v, then charged to a current ≤0.05 mA at 4.25 v at constant voltage, left standing for 5 min, and then discharged to 2.8 v at 1C, the capacity was recorded as Dn (n=0, 1, 2....), and the previous process was repeated until the capacity was attenuated to 80%.

Test results are illustrated in Table 3.

**Table 3**

| | DSC exothermic temperature | Cycle performance of full battery at 25°C@100cls | Cycle performance of full battery at 45°C@100cls |
|---|---|---|---|
| Example 1 | 245°C | 96.5% | 94.2% |
| Example 2 | 243°C | 95.7% | 93.1% |
| Example 3 | 239°C | 95.9% | 93.5% |
| Example 4 | 241°C | 96.2% | 93.9% |
| Example 5 | 244°C | 96.2% | 93.8% |
| Example 6 | 243°C | 95.6% | 93.2% |
| Example 7 | 242°C | 95.9% | 93.4% |
| Example 8 | 242°C | 96.6% | 94.3% |
| Example 9 | 243°C | 96.8% | 94.4% |
| Example 10 | 236°C | 95.9% | 93.7% |
| Example 11 | 238°C | 95.8% | 93.5% |
| Example 12 | 239°C | 96.1% | 93.9% |
| Example 13 | 244°C | 96.3% | 94.1% |
| Example 14 | 245°C | 96.3% | 94.2% |
| Example 15 | 233°C | 95.1% | 92.9% |
| Example 16 | 240°C | 95.9% | 93.5% |
| Example 17 | 242°C | 96.1% | 93.7% |
| Example 18 | 244°C | 96.3% | 93.8% |
| Example 19 | 240°C | 95.6% | 93.4% |
| Example 20 | 244°C | 96.2% | 93.5% |
| Example 21 | 242°C | 95.5% | 93.6% |
| Example 22 | 243°C | 95.7% | 93.5% |
| Example 23 | 244°C | 95.9% | 93.6% |
| Example 24 | 244°C | 95.8% | 93.5% |
| Example 25 | 244°C | 96.3% | 94.1% |
| Comparative Example 1 | 231°C | 92.7% | 90.8% |
| Comparative Example 2 | 227°C | 91.3% | 89.9% |

It can be known from the comparison between the examples and the comparative examples that, in the present application, by reasonably disposing the positive electrode materials of each layer, better normal temperature and high temperature cycle performance can be achieved, and the thermal stability of the materials is better. Further, it can be known from the comparison between Example 1 and Example 15 that the normal temperature and high temperature cycle performance can be further improved by disposing the intermediate layer, and the material has better thermal stability.

The technical features of the above-mentioned example may be combined, and all possible combinations of the technical features in the above-mentioned embodiments are not described for concise description, however, it should be regarded that the combinations of the technical features are with the range described in the present description as long as there is no inconsistency.

The above examples merely illustrate several embodiments of the present application, which are described specifically and detailedly, but are not to be construed as limiting the scope of the patent for invention. It should be noted that for those of ordinary skill in the art, several variations and modifications may be made without departing from the concept of the present application, which are all within the protection scope of the present application. Therefore, the scope of patent protection of the present application shall be subject to the appended claims.

## Claims

1. A positive electrode active material, comprising a core-shell particle, wherein the core-shell particle comprises an inner core and a shell layer, the inner core comprises a first positive electrode material, and the shell layer comprises a second positive electrode material;
the first positive electrode material comprises a material represented by a general formula of Liₐ₁Ni_{b1}M1_{c1}O₂, M1 comprises one or more of Mn, Co, Al, Mg, Ti, Zr, and W, 0.9≤a1≤1.2, b1+c1=1; and
the second positive electrode material comprises a material represented by a general formula of Liₐ₂Ni_{b2}M2_{c2}O₂, M2 comprises one or more of Mn, Al, Sr, Nb, and Y, 0.9≤a2≤1.2, b2+c2=1;
wherein c2 and c1 satisfy: c2-c1≥0.05.

2. The positive electrode active material according to claim 1, wherein c2 and c1 satisfy: 0.05≤c2-c1≤0.3.

3. The positive electrode active material according to claim 1 or 2, wherein the second positive electrode active material satisfies one or more of the following features:
(1) $0.6 \leq b 2 \leq 0.92 ;$
(2) $0.05 \leq c 2 \leq 0.4 ;$ and
(3) $0.9 \leq a 2 \leq 1.02 .$

4. The positive electrode active material according to any one of claims 1 to 3, wherein the positive electrode material satisfies one or more of the following features:
(1) $0.8 \leq b 1 \leq 1 ;$ and
(2) $0 \leq c 1 \leq 0.2 ;$ and
(3) $0.95 \leq a 1 \leq 1.05 .$

5. The positive electrode active material according to any one of claims 1 to 4, wherein a thickness of the shell layer is 0.1 µm to 3 µm.

6. The positive electrode active material according to any one of claims 1 to 5, wherein the core-shell particle further comprises an intermediate layer disposed between the inner core and the shell layer, the intermediate layer comprises a third positive electrode material, the third positive electrode material comprises a material represented by a general formula of Liₐ₃Ni_{b3}M2_{c3}M3_{d3}O₂, M3 comprises one or more of Zr, Ti, W, Mo, Ta, Sn, Se and Sb, 0.9≤ a3≤1.2, and b3+c3+d3=1.

7. The positive electrode active material according to claim 6, wherein the third positive electrode material satisfies one or more of the following features:
(1) $0.8 \leq b 3 \leq 0.9 ;$ and
(2) $0 \leq c 3 \leq 0.1 ;$ and
(3) $0.02 \leq d 3 \leq 0.1 .$

8. The positive electrode active material according to claim 6 or 7, wherein a thickness of the intermediate layer is 0.1 µm to 1 µm.

9. The positive electrode active material according to any one of claims 1 to 8, wherein a Dv50 of the core-shell particle is 6 µm to 15 µm.

10. A method for preparing a positive electrode active material according to any one of claims 1-9, comprising the following steps:
mixing a Ni salt, a salt of M1 and a first solvent according to a general formula Liₐ₁Ni_{b1}M1_{c1}O₂ to prepare a first precursor solution;
mixing a Ni salt, a salt of M2 and a second solvent according to a general formula Liₐ₂Ni_{b2}M2_{c2}O₂ to prepare a second precursor solution;
preparing a precursor of the core-shell particle by a precipitation method using the first precursor solution and the second precursor solution; and
mixing the precursor with a lithium salt for calcination to prepare the positive electrode active material.

11. The method for preparing a positive electrode active material according to claim 10, further comprising steps of preparing a third precursor solution by mixing a Ni salt, a salt of M2, a salt of M3, and a third solvent according to a general formula of Liₐ₃Ni_{b3}M2_{c3}M3_{d3}O₂, and preparing the precursor of the core-shell particle by precipitating the third precursor solution, the first precursor solution, and the second precursor solution.

12. The method for preparing a positive electrode active material according to claim 10 or 11, wherein preparation of the precursor of the core-shell particle has one or more of the following features:
(1) a precipitant used comprises one or more of sodium hydroxide, sodium carbonate, potassium carbonate and potassium hydroxide;
(2) a complexing agent used comprises one or more of ammonia, ammonium chloride, ammonium sulfate, urea, citric acid and ethylenediaminetetraacetic acid;
(3) controlling a pH value of a reaction to be 11 to 14; and
(4) the reaction temperature being 40°C to 80°C.

13. The method for preparing a positive electrode active material according to any one of claims 10 to 12, wherein sintering has one or a plurality of the following features:
(1) a sintering temperature being 400°C to 800°C;
(2) a sintering time being 8h to 18h;
(3) a heating rate being 0.5°C/min to 5°C/min; and
(4) an atmosphere being air or an O₂ atmosphere.

14. A positive electrode sheet, comprising the positive electrode active material according to any one of claims 1 to 9 or the positive electrode active material prepared by the preparation method according to any one of claims 10 to 13.

15. A secondary battery, comprising the positive electrode sheet according to claim 14.

16. The secondary battery according to claim 15, wherein the secondary battery is a cylindrical battery.

17. An electric device, comprising one or more of the positive electrode sheet according to claim 14 and the secondary battery according to any one of claims 15 to 16.
